# FASCICULE DE BREVET EUROPEEN

(11) **EP 0 842 116 B1**
(45) Date de publication et mention de la délivrance du brevet: **26.01.2000**
(21) Numéro de dépôt: 97927243.2
(22) Date de dépôt: 05.06.1997
(51) Int. Cl.: C01B 39/34

(54) **MAZZITE ACTIVEE ENRICHIE EN SILICE, PROCEDE D'OBTENTION ET APPLICATION**
AKTIVIERTES, MIT KIESELSÄURE ANGEREICHERTES MAZZIT, HERSTELLUNGSVERFAHREN SOWIE DESSEN VERWENDUNG
ACTIVATED SILICA ENRICHED MAZZITE, PRODUCTION METHOD AND APPLICATION THEREOF

(30) Priorité: 06.06.1996 FR 9607013
(43) Date de publication de la demande: 20.05.1998
(73) Titulaire: ELF AQUITAINE, 92400 Courbevoie (FR)
(72) Inventeur: DI RENZO, Francesco, F-34000 Montpellier (FR); FAJULA, François, F-34820 Theyran (FR); FITOUSSI, Fredj, F-69007 Lyon (FR); SCHULZ, Philippe, F-69110 Sainte Foix lès Lyon (FR)
(74) Mandataire: Boillot, Marc
(86) Numéro de dépôt international: FR9700998
(87) Numéro de publication internationale: WO9746487

(56) Documents cités:
- EP-A- 0 206 871
- EP-A- 0 273 403
- EP-A- 0 419 307
- EP-A- 0 601 924
- GB-A- 2 175 890
- US-A- 4 241 036
- US-A- 5 139 761

## Description

La présente invention a pour objet une mazzite activée enrichie en silice, obtenue à partir d'un gel de cristallisation contenant des cristaux de zéolithe. La présente invention concerne également son procédé d'obtention et son application comme catalyseur de réaction de conversion d'hydrocarbures, notamment en isomérisation, ou comme tamis moléculaire.

Obtenue pour la première fois par voie de synthèse en 1966 sous le nom de zéolithe oméga par Flanigen et Kellberg (US 4.241.036), la mazzite a été identifié en 1972 dans les roches basaltiques du Mont Semiol, prés de Montbrison, Loire, France. Sa structure cristalline a été résolue par Galli (Cryst. Structure Comm. 3, 339, 1974) et Rinaldi et coll.(Acta Cryst. B31, 1603, 1974). De par sa structure, de symétrie hexagonale, elle appartient à la catégorie des zéolithes à larges pores à porosité unidirectionnelle de forte acidité, ce qui la rend particulièrement intéressante pour les applications en catalyse, notamment pour la conversion d'hydrocarbures.

L'oméga revendiquée par Flanigen (US 4.241.036) se caractérise par un spectre des rayons X commun à toutes les sortes de mazzites préparées ultérieurement telles que la ZSM-4, la LZ 202, ou la MZ-34. Cependant, ces mazzites bien que de structure identique, se distinguent les unes des autres par leur voie de synthèse particulière et des caractéristiques physiques différentes, tel que le rapport Si/Al, leur surface spécifique ou leur porosité.

Pour obtenir une mazzite, on peut former des gels dits de cristallisation contenant une source d'aluminium trivalent, une source de silicium, au moins un cation alcalin ou alcalino-terreux sous forme d'hydroxyde, de l'eau et éventuellement un agent structurant organique. Cependant, à partir de ces constituants en faisant varier la stoechiomètrie du gel ou les conditions du traitement hydrothermal ultérieur nécessaire à la cristallisation, on peut obtenir des zéolithes bien différentes de la mazzite telles que l'offrétite (OFF) ou la zéolithe L (LTL) (S. Ernst et J. Weitkamp; Catalysis Today 19, 1994, 27-60).

Pour améliorer les caractéristiques physiques de ces mazzites, on a introduit dans le gel de synthèse ou de cristallisation comme source de silicium des gels de silice, des silices colloïdales, des silices précipitées, des silicates ou des esters siliciques hydrolysables et comme sources d'aluminium trivalent des aluminates, des hydroxydes d'alumine, de l'alumine sous forme pure ou commerciale ou des aluminosilicates amorphes. Ultérieurement, on a remplacé ces sources d'aluminium par des aluminosilicates cristallins, naturels ou synthétiques, principalement d'argiles naturelles. Une telle substitution a permis d'obtenir une croissance homogène des cristaux du fait de la dissolution lente et régulière de ces aluminosilicates dans le milieu de synthèse (Dwyer, US 4.091.007; Fajula, US 4.891.200).

D'autres méthodes ont été développées pour synthétiser une nouvelle mazzite à partir de germes de mazzite ou d'une autre zéolithe en présence ou en l'absence d'agent structurant organique contenant des ions alkylammonium (Cannan, US 4.840.779, Di Renzo, FR 2.651.221 et FR 2.698.862).

Ainsi, en faisant varier la température de cristallisation entre 90°C et 150°C et la teneur des gels de cristallisation en cations sodium et en agent structurant organique tel que le tétraméthylammonium, la choline ou le p-dioxane, on a pu obtenir les différents types de mazzite connus appelées oméga, ZSM-4, LZ 202 ou MZ-34 (cf W.M. Meier et D.H. Olson, "Atlas of Zeolite Structure Types", Third Revised Edition, Butterworth, London 1992).

Cependant, quel que soit le mode de synthèse employé ci-dessus, il a été impossible de synthétiser une mazzite présentant un rapport Si/Al dans les précurseurs ou encore produits bruts de synthèse supérieur à 5, ces rapports étant généralement compris entre 2.5 et 5, ce qui correspond à une concentration molaire en aluminium variant entre 0,166 et 0,285. Or, l'association d'une forte teneur en aluminium et d'une porosité unidirectionnelle n'est pas favorable à l'application d'une telle mazzite non activée en catalyse, car le rapport Si/Al optimum recherché est fréquemment supérieur à 10 pour une telle application ce qui ne peut être obtenu que par désalumination au cours d'une phase d'activation.

On entend usuellement par phase d'activation l'ensemble des étapes élémentaires effectuées après la synthèse d'une zéolithe et visant à la rendre active en catalyse et en adsorption. Ces étapes élémentaires généralement précédées par une étape de calcination du précurseur de zéolite brut de synthèse, comprennent un échange ionique, puis un traitement hydrothermal et un lavage acide.

Ces traitements sont connus pour induire de profondes modifications texturales et structurales des zéolithes, et des mazzites en particulier, qui affectent leur porosité et leur acidité. Ainsi, l'étape de calcination, destinée à décomposer le structurant organique occlus dans les pores du précurseur de mazzite, entraîne la dégradation partielle de la structure et la formation de résidus amorphes restant piégés dans les pores et obstruant les canaux de la mazzite. Plus le rapport Si/Al dans le précurseur est faible, plus la perte de cristallinité et la quantité de résidus amorphes sont élevés. Ceci limite l'efficacité catalytique de la mazzite et celle des traitements ultérieurs de l'activation. En outre, les étapes de traitement hydrothermal et de lavage acide conduisent à la formation de liaisons non pontantes, créant des défauts silanols qui diminuent la force et le nombre de centres acides, en réduisant l'ordre à grande distance dans le réseau zéolithique.

La présente invention a pour but d'éviter les problèmes rencontrés par des mazzites de rapport Si/Al trop faible qui après activation contiennent des résidus amorphes et des défauts de réseaux réduisant les performances catalytiques, et vise l'obtention d'une mazzite activée aux propriétés améliorées enrichie en silice, au nombre de défauts silanols limité dans le réseau, présentant un plus grand nombre de sites acides disponibles, et surtout une force acide accrue.

La présente invention a pour objet une mazzite activée enrichie en silice de formule chimique à l'état anhydre exprimée en rapport molaire comme
a M₂/ₙO ; Al₂O₃ ;b SiO₂
avec a variant de 0 à 0,5, M désignant un cation alcalin de valence n et b étant supérieur à 7 caractérisée en ce qu'elle présente une force acide, exprimée en quantité de chaleur d'adsorption de l'ammoniac supérieure à 190 kJ/mole, un volume poreux mesuré par adsorption du cyclohexane supérieur à 0,09 ml/g.

Selon la présente invention, la force acide de la mazzite activée correspond à la quantité de chaleur initiale d'adsorption de l'ammoniac ; elle est mesurée par microcalorimètrie. La mesure consiste à adsorber à 150° de l'ammoniac gazeux sur la mazzite activée et à mesurer la quantité de chaleur libérée. La mazzite activée selon l'invention présente une force acide particulièrement significative, car jusqu'à présent, quelle que soit la méthode de synthèse connue et mise en oeuvre par l'homme de l'art, il n'a jamais pu obtenir de valeur aussi importante de la quantité de chaleur d'adsorption de l'ammoniac sur une mazzite activée.

Ces mesures d'acidité de la mazzite à partir des quantités de chaleur d'adsorption de l'ammoniac sont décrites très largement dans l'article initulé : « A multitechnique characterization of the acidity of dealuminated mazzite » par D.McQueen, B.H.Chiche, F.Fajula, A. Auroux, C.Guimon, F.Fitoussi et Ph.Schulz, J. Catal., 1996, 161.

Pour obtenir une telle force acide, la mazzite activée selon l'invention est obtenue à partir d'un précurseur de zéolithe lui-même synthétisé à partir d'un gel de cristallisation contenant de la faujasite X, de rapport Si/Al inférieur à 1,5 le dit précurseur étant ultérieurement soumis à un traitement d'activation.

La Demanderesse avait déjà synthétisé de la mazzite à partir de grains de faujasite Y de rapport Si/Al supérieur à 1,5 comme il est décrit dans le brevet FR 2.698.862. Cependant, contrairement à ce qu'elle avait préconisé la composition molaire du gel de cristallisation est totalement différente; en effet, les rapports molaires varient
de 5 à 15 pour SiO₂/Al₂O₃
de 1 à 2 pour SiO₂/TMA₂O
de 0,03 à 0,25 pour TMA₂O/Na₂O
et de 30 à 150 pour H₂O/Na₂O
avec TMA₂O le structurant organique choisi parmi les tétraalkylammoniums, chaque groupement alkyle comprenant de 1 à 4 carbones et désignant de préférence l'ion tétraméthyl ammonium. Le sodium est apporté en partie par l'ajout de soude utilisé pour ajuster l'alcalinité du gel et les sources de silicium tétravalent et d'aluminium trivalent proviennent pour une part du groupe constitué par les silicates, les silices solides ou colloïdales, les gels et xérogels, les esters siliciques hydrolysables et les diatomites et d'autre part de la faujasite X. Dans le gel, il peut cependant y avoir un mélange d'ions alcalins, ceux-ci pouvant notamment être apportés par la faujasite X.

L'utilisation de faujasite X commercialement disponible a permis de réduire à la fois le coût des matières premières et le coût de fabrication de la zéolithe de type mazzite. En effet, il n'est plus nécessaire de former des grains de configuration particulière, délimités uniquement par des surfaces arrondies dont la synthèse est coûteuse notamment en temps (10 à 12 jours de cristallisation à 50°C avec ou sans agitation), comme il était décrit dans le brevet FR 2.698.862.

Dans le procédé selon l'invention, il est possible que le traitement d'activation comprenant au moins deux étapes, une première étape d'échange ionique et une deuxième étape de désalumination, soit mis en oeuvre sur le précurseur de zéolithe brut de synthèse après cristallisation ou sur le précurseur ayant subi le traitement thermique classique de calcination pour éliminer le structurant organique. Cette étape de calcination du précurseur brut de synthèse consiste en un chauffage sous flux d'azote ou d'air ou d'un mélange des deux pendant 5 minutes à 10heures, de préférence 5 heures, à une température supérieure à 450°C, de préférence comprise entre 500 et 550°C . Cependant, dans une forme préférée de l'invention, le traitement d'activation est appliqué sur le précurseur brut de synthèse.

En éliminant l'étape de calcination reconnue jusqu'alors nécessaire, pour éliminer le structurant organique, on a pu obtenir des mazzites avec des réseaux cristallins présentant moins de défauts structuraux (décelables par RMN de Al²⁷, Infra Rouge,...ou autres méthodes connues de l'homme de l'art), voire aucun.

Dans un mode préféré de l'invention l'étape d'échange ionique consiste à échanger les ions alcalins du précurseur de zéolithe brut de synthèse contenant le structurant organique par lavage au moyen d'une solution aqueuse d'un sel d'ammonium et/ou d'un acide minéral ou organique de pH inférieur ou égal à 3.

Au cours de l'étape de désalumination, le solide récupéré après échange ionique est maintenu à une température comprise entre 450 et 850 °C sous atmosphère humide pendant une durée de 1 minute à 4 heures, puis lavé au moyen d'une solution tampon acide de pH variant de 1 à 5, à une température variant de 20 à 100 °C. Le solide ainsi traité thermiquement est lavé au cours de la deuxième phase de désalumination par une solution tampon constituée par un mélange d'au moins un sel d'ammonium et d'au moins un acide minéral ou organique de pH de préférence compris entre 2 et 3. Dans un mode préféré, la solution tampon contiendra des sels d'ammonium minéraux et leur acides correspondants.

Un deuxième objet de l'invention est le procédé d'obtention de la mazzite activée comprenant une étape de préparation du précurseur de mazzite et une étape d'activation de ce dit précurseur de mazzite. Il se différencie des autres procédés connus d'obtention de mazzite activée en ce que pour préparer le précurseur, on introduit une faujasite X dans la composition du gel de cristallisation, que le traitement d'activation s'applique au précurseur contenant le structurant organique et que le lavage acide de désalumination est effectué au moyen d'une solution tampon d'un sel d'acide et d'un acide minéral ou organique de pH inférieur à 3, de préférence compris entre 2 et 3.

En outre, le dit procédé selon l'invention se caractérise également par une composition molaire du gel de cristallisation en silice, alumine, ions alcalins et structurant organique telle que les rapports molaires varient
de 5 à 15 pour SiO₂/Al₂O₃
de 1 à 2 pour SiO₂/TMA₂O
de 0,03 à 0,25 pour TMA₂O/Na₂O
et de 30 à 150 pour H₂O/Na₂O
avec TMA₂O le structurant organique choisi parmi les ions tétraalkylammoniums, chaque groupement alkyle comprenant de 1 à 4 carbones, de préférence les ions tétraméthylammoniums, les sources de silicium tétravalent et d'aluminium trivalent provenant pour une part du groupe constitué par les silicates, les silices solides ou colloïdales, les gels et xérogels, les esters siliciques hydrolysables et les diatomites et d'autre part de la faujasite X.

Comparé aux procédés classiques, le procédé selon l'invention présente une simplification de traitement en temps et en coût de traitement par l'utilisation de zéolithes commerciales facilement disponibles et par la suppression d'étapes de calcination génératrice de défauts dans la mazzite activée.

De telles mazzites activées selon l'invention sont particulièrement efficaces pour la conversion d'hydrocarbures, notamment l'isomérisation des paraffines de C4 à C8 et pour toute transformation d'hydrocarbures faisant appel à un mécanisme de catalyse acide ou bifonctionnnelle, notamment comme tamis moléculaires dans les procédés de séparation d'hydrocarbures.

Les exemples donnés ci-après visent à expliciter l'invention mais ne peuvent en aucun cas en limiter la portée.

### EXEMPLE I

Le présent exemple vise à montrer la supériorité de la mazzite selon l'invention comparée aux mazzites activées selon l'art antérieur au regard de la force acide.

Quatre échantillons de mazzite activée ont été préparés:
- La mazzite activée caractéristique de l'invention appelée MAZ-X₀
- la mazzite activée selon le brevet Fr 2.698.862 appelée MAZ-Y₁
- la mazzite activée obtenue selon le brevet FR 2.651.221 appelée MAZ-G
- la mazzite activée obtenue selon le protocole du brevet US 5.139.761 appelée MAZ-T

Les conditions de préparation de ces différentes zéolithes sont données dans le tableau I ci-après.

**TABLEAU I**

| | MAZ-X₀ | MAZ-Y₁ | MAZ-G | MAZ-T |
|---|---|---|---|---|
| Composition du gel (en g) | | | | |
| H₂O | 9511,6 | 1004,8 | 50 | 15604 |
| NaOH | 752,8 | 66,1 | 2,62 | 6804 |
| KOH | 0 | 0 | 1,92 | 0 |
| TMACI | 130,8 | 148,2 | 0,97 | 2690 (TMABr ) |
| Source SiO₂ | 1663,6 (Zéosil Z175) | 149,6 (Cecagel-Ceca) | 8,10 (Cegagel-Ceca) | 57780 (Silicate de sodium : 21,9% SiO₂) |
| Source Al₂O₃ | 654 (Siliporite Na) | 87 (Faujasite Y particulière) | 1,85 (Faujasite Y particulière) | 42770 Alun (8,3% Al₂O₃ + 24,1% H₂SO₄ + 67,6% H₂O) |

| Conditions de cristallisation | | | | |
|---|---|---|---|---|
| T°C | 115°C | 115°C | 115°C | 125°c |
| Pression | Autogène | Autogène | Autogène | Autogène |
| Temps | 45h | 45h | 24h | 45h |
| Séchage | 110°C | 110°C | 110°C | 100°C |
| (Temps h) | (12h) | (12h) | (12h) | |
| Calcination | Non | 550°C (4h) sous air | 550°C(4h) sous air | 540°C(1.5h) |

Dans tous les cas, on prépare le précurseur de mazzite dans les conditions fixées dans le tableau I selon l'ordre décrit ci-après.

Pour former le gel de cristallisation ou de synthèse des MAZ-X₀, MAZ-Y1 et MAZ-G , on dissout dans l'eau permutée la soude puis le chlorure de tétraméthylammonium (TMACl) en agitant la solution mécaniquement à environ 150 tours par minute, puis on ajoute progressivement la source de silice en maintenant l'agitation pendant une heure. Enfin on ajoute la source d'aluminium toujours en agitant la solution et en la maintenant encore pendant 2 heures, cette dernière phase d'agitation correspondant au mûrissement du gel. Le gel ainsi mûri est transféré dans un réacteur où il est maintenu en agitation, sous pression autogène pendant 24 heures à 115°C, pour permettre aux cristaux de mazzite de croître. Le solide recueilli ou précurseur de zéolithe est séché pendant 12 heures à l'étuve à 115 °C. A la fin du sèchage, les cristaux sont calcinés sous air à 550°C pendant 4 heures. Pour la mazzite selon l'invention, cette étape de calcination a été supprimée. Pour préparer la MAZ T, on a suivi la procédure décrite dans les exemples 1 et 2 du Brevet U.S 5.139.761.

Les conditions particulières du traitement d'activation pour chacune des mazzites échantillonnées est donné dans le tableau II ci-après

**TABLEAU II**

| | MAZ-X₀ | MAZ-Y₁ | MAZ-G | MAZ-T |
|---|---|---|---|---|
| Echange ionique | | | | |
| Solution | (NH₄)₂SO₄ | NH₄NO₃ | NH₄NO₃ | NH₄NO₃ |
| (Concentration) | (0,5M) | (0,5M) | (0,5M) | (0,5M) |
| T°C | 80°C | 80°C | 80°C | 93°C |
| Temps | 1h | 1h | 1h | 1h |
| Lavage Séchage | oui | oui | oui | oui |

| Désalumination | | | | |
|---|---|---|---|---|
| Traitement thermique | | | | |
| 100%H₂O | | | | |
| T°C(Temps en h) | 620°C (2h) | 620°C (2h) | 620°C (2h) | 550°C (2h) |
| Lavage acide | Tampon (NH4)₂SO₄(0,5M) | HNO₃ | HNO₃ | NH4 NO3 +HNO3 |
| | + HNO₃(1N) | (1,5N) | (1,5N) | |
| T°C | reflux | reflux | reflux | 93°C |
| Cristallinité | 95% | 90% | 80% | 85% |

Ce traitement d'activation comporte une première étape d'échange ionique et une deuxième étape de désalumination comportant deux phases la première de traitement à la vapeur, la seconde de lavage acide.

L'étape d'échange ionique des ions sodium se fait par lavage du précurseur de zéolithe calciné ou non (invention) par une solution de sel d'ammonium de compositions décrites dans le tableau II à une température inférieure à 100°C. Le traitement à la vapeur consiste à laisser la zéolithe dans une atmosphère de vapeur d'eau à une température supérieure à 500°C pendant au moins deux heures. L'étape de lavage acide consiste à laver les solides obtenus par une solution acide de pH et de composition donnés dans le tableau II pendant au moins une demi-heure tel que le rapport du volume de solution sur le poids de zéolithe traitée soit inférieur ou égal à 10 ml/g.

Les cristallinités des mazzites activées mesurées par diffraction des rayons X sont données dans le tableau II et leur force acide respective exprimée en kilojoules par mole sont données dans le tableau III.

La force acide de chacune de ces mazzites activées est mesurées en faisant appel à la technique de microcalorimètrie d'adsorption de l'ammoniac décrite par A. AUROUX dans "Catalyst, Characterization, Fundamental and Applied Catalysis. Physical Techniques for solid materials", B. IMELIK and J.C. VEDRINE, Eds, Plenum Press, New York, 1994, permettant d'étudier la force acide des sites présents, en mesurant les sites acides les plus forts par mesure de la chaleur initiale de désorption de NH₃.

**TABLEAU III**

| | MAZ-X₀ | MAZ-Y₁ | MAZ-G | MAZ-T |
|---|---|---|---|---|
| Q ads (kJ/mole) | 205 | 190 | 165 | 170 |
| Acidité en meq H⁺/g | 0,385 | 0,250 | 0,190 | 0,205 |

On constate que la force acide et le nombre de sites acides sont largement supérieurs pour la mazzite activée selon l'invention.

### EXEMPLE II

Le présent exemple vise à montrer la spécificité du procédé de d'obtention de mazzite activée selon l'invention à partir de faujasite X comparée au procédé de préparation de mazzite activée obtenu à partir de faujasite Y.

Plusieurs échantillons ont été testés:
- le premier est la mazzite activée MAZ X₀, conforme à l'invention préparée comme décrit dans l'exemple I,
- le deuxième est la mazzite activée obtenue à partir de faujasite Y (spécialement synthétisées comme dans le brevet 2.698.862) dans les conditions de la présente invention, appelée ci-après (MAZ-Y₀)ₐ,
- le troisième est une mazzite activée obtenue comme (MAZ-Y₀)ₐ, mais obtenue à partir d'une faujasite Y commerciale, appelée ci-après (MAZ-Y₀)_{b}.
- le quatrième est une mazzite activée obtenue à partir de faujasite X dans les conditions du brevet FR 2.698.862 appelée ci-après MAZ-X₁,
- le cinquième est la mazzite activée MAZ-Y1 conforme à l'invention du brevet FR 2.698.862 et préparée comme décrit dans l'exemple I,

Le tableau IV ci-après rassemble les caractéristiques des gels de cristallisation et de la cristallinité obtenu pour chaque échantillon après la première étape de synthèse et après activation.

**TABLEAU IV**

| | MAZ-X₀ | (MAZ-Y₀)a | (MAZ-Y₀)b | MAZ-X1 | MAZ-Y1 |
|---|---|---|---|---|---|
| Gel de cristallisation(g) | | | | | |
| H₂O | 9511,6 | 9510 | 9510 | 1004 | 1004,9 |
| NaOH | 752,8 | 753 | 753 | 67 | 67 |
| TMACI | 130,8 | 130 | 130 | 149 | 149 |
| Source SiO₂ | 1669,6(a) | 1664(a) | 1663(a) | 150(b) | 149,6(b) |
| Source Al₂O₃ | 654,4(c) | 655(d) | 656(e) | 88(c) | 87,6(d) |
| Morphologie des cristaux et cristallinité | prismes hexagonaux de 2 X 1µm environ 100% | amorphe % MAZ <25% | amorphe % MAZ <25 | produit essentiellement amorphe | prismes hexagonaux de 2.5 X 1;5 µm 100% |

| | | | | | |
|---|---|---|---|---|---|
| (a) = Zéosil Z145 commercialisée par Rhône Poulenc. | | | | | |
| (b) = Cecagel commercialisée par CECA | | | | | |
| (c) = Siliporite NaX commercialisée par CECA. | | | | | |
| (d) = NaY obtenue selon le procédé de synthèse décrit dans FR 2.698.862 | | | | | |
| (e) = NaY commercialisée par ZEOCAT( ZF 110 de rapport Si/Al=2,7) | | | | | |

On constate que la préparation de mazzite "Y" à partir de faujasite Y selon la présente invention est impossible et cela quelle que soit la taille ou la forme des cristaux de la dite faujasite Y. De même on ne peut préparer de mazzite "X" à partir de la faujasite X selon le protocole du brevet FR 2.698.682. Les deux voies d'obtention de mazzite par les faujasites X et Y sont tout à fait distinctes

### EXEMPLE III

Le présent exemple décrit l'utilisation de la mazzite activée selon l'invention dans la composition de catalyseurs pour l'isomérisation des paraffines (ici du n-Hexane) comparé à l'utilisation d'autres mazzites activées l'art antérieur dans ces catalyseurs.

Pour préparer ces catalyseurs d'isomérisation, chaque échantillon de mazzite activée est malaxé avec de l'alumine et de l'eau pour former un mélange pâteux contenant 20 % en poids d'alumine. Le mélange est extrudé au travers d'une filière ; les extrudés sèchés et calcinés présentent un diamètre de 1,6 mm et une longueur variant de 3 à 5 mm.

On dépose sur ces extrudés constituant le support du catalyseur, 0.3 % en poids de platine par échange cationique du support avec le sel Pt(NH₃)₄Cl₂, H₂O en présence d'ions compétiteurs, par exemple de nitrate d'ammonium.

Le catalyseur est ensuite calciné sous air à 520°C, puis le métal est réduit sous flux d'hydrogène en augmentant progressivement la température de 150 à 450°C. A la fin du traitement, les phases métalliques sont parfaitement divisées et réparties à l'intérieur du solide.

Les tests comparatifs d'activité des catalyseurs ainsi formés à partir de mazzites sont réalisés dans une unité catalytique en lit fixe, aux conditions opératoires ci-après :
température du réacteur entre 150 et 300 °C,
pression de 1 atmosphère,
un rapport molaire hydrogène/N-Hexane égal à 70,
un VVH (vitesse spatiale) exprimé par le rapport des masses de charge et de catalyseur égal à 0,2 h⁻¹.

Les performances de ces catalyseurs sont définis à partir des caractéristiques suivant:
T_{50%} = température nécessaire l'obtention d'une conversion à 50% du n-Hexane.

On entend par conversion le pourcentage de produit isomérisé par rapport à la quantité de ce même produit présent dans la charge.

RDTᵢ = rendement en isomères dibranchés à 50% de conversion du n-Hexane avec i = 23DMB correspondant à l'isomère 2,3-diméthylbutane et i = 22DMB correspondant à l'isomère 2,2-diméthylbutane. Ce rendement correspond à 100 fois le rapport de la masse d'isomère considéré sur la masse totale des hydrocarbures après isomérisation.

T_{craq} = température d'apparition des produits de craquage en °C.

Conv. = Conversion optimum en % qui peut être atteinte avec le catalyseur considéré.

Tconv. = température à laquelle la conversion optimum est atteinte en °C.

Les résultats sont rassemblés dans le tableau V ci-après.

**TABLEAU V**

| Catalyseur à base de : | T_{50%} (°C) | RDT_{22DMB} (%) | RDT_{23DMB} (%) | T_{craq} (C°) | Conv. (%) | T_{conv} (C°) |
|---|---|---|---|---|---|---|
| MAZ-Xₙ | 182 | 5,8 | 8,1 | 226 | 90 | 232 |
| MAZ-Y₁ | 190 | 5,2 | 8,0 | 232 | 85 | 245 |
| MAZ-G | 200 | 4,9 | 7,3 | 231 | 86 | 255 |
| MAZ-T | 205 | 4,6 | 7,4 | 237 | 82 | 260 |

On constate d'après ce tableau que la catalyseur préparé à partir de MAZ-X₀ conformémént à l'invention, est plus actif (températures de travail T_{50%} et T_{conv} inférieures pour obtenir un taux de conversion supérieur) et plus sélectif en isomères dibranchés que les autres catalyseurs de l'art antérieur.

## Revendications

1. Mazzite activée enrichie en silice de formule chimique à l'état anhydre exprimée en rapports molaires comme
a M₂/ₙO ; Al₂O₃ ;b SiO₂ avec a variant de 0 à 0,5 , M étant un cation alcalin de valence n et b étant supérieur à 7 caractérisée en ce qu'elle présente une force acide correspondant à une quantité de chaleur mesurée par microcalorimétrie d'adsorption de l'ammoniac, supérieure à 190 kJ/mole, un volume poreux mesuré par adsorption du cyclohexane supérieur à 0,09ml/g.

2. Mazzite activée selon la revendication 1 caractérisée en ce qu'elle est obtenue à partir d'un précurseur de zéolithe lui-même synthètisé à partir d'un gel de cristallisation contenant de la faujasite X, le dit précurseur étant soumis à un traitement d'activation.

3. Mazzite activée selon la revendication 2 caractérisée en ce que le gel de cristallisation présente une composition molaire en silice, alumine, ions alcalins et structurant organique telle que les rapports molaires varient
de 5 à 15 pour SiO₂/Al₂O₃
de 1 à 2 pour SiO₂/TMA₂O
de 0,03 à 0,25 pour TMA₂O/Na₂O
et de 30 à 150 pour H₂O/Na₂O
avec TMA₂O le structurant organique choisi parmi les ions tétraalkylammoniums, chaque groupement alkyle comprenant de 1 à 4 carbones de préférence les ions tétraméthylammoniums, les sources de silicium tétravalent et d'aluminium trivalent provenant pour une part du groupe constitué par les silicates, les silices solides ou colloïdales, les gels et xérogels, les esters siliciques hydrolysables et les diatomites et d'autre part de la faujasite X.

4. Mazzite activée selon les revendications 2 ou 3 caractérisée en ce que le précurseur de zéolithe avec ou sans structurant organique est activé en au moins deux étapes, une première étape d'échange ionique et une deuxième étape de désalumination.

5. Mazzite activée selon les revendications 2 à 4 caractérisée en ce qu'au cours de l'étape d'échange ionique, les ions alcalins du précurseur de zéolithe contenant le structurant organique, sont échangés par lavage au moyen d'une solution aqueuse d'un sel d'ammonium et/ou d'un acide minéral ou organique de pH inférieur ou égal à 3.

6. Mazzite activée selon les revendications de 2 à 5 caractérisée en ce qu'au cours de la première phase de l'étape de désalumination, le solide obtenu après échange ionique est maintenu à une température comprise entre 450 et 850 °C sous atmosphère humide pendant de 1 minute à 4 heures, puis lavé au moyen d'une solution tampon acide de pH variant de 1 à 5, à une température variant de 20 à 100 °C.

7. Mazzite activée selon les revendications 2 à 6 caractérisée en ce qu'au cours de la deuxième phase de désalumination, le solide traité thermiquement est lavé par une solution tampon constituée d'un mélange d'au moins un acide minéral ou organique avec au moins un sel d'ammonium d'au moins un acide minéral ou organique de pH de préférence compris entre 2 et 3.

8. Mazzite activée selon les revendications de 2 à 7 caractérisée en ce que la solution tampon est un mélange d'un sel d'ammonium et de l'acide correspondant à ce dit sel.

9. Procédé d'obtention de la mazzite activée selon les revendications de 1 à 8 comprenant une étape de préparation du précurseur de zéolithe et une étape d'activation du dit précurseur de zéolithe caractérisé en ce que le gel de cristallisation contient une faujasite X, que le traitement d'activation s'applique au précurseur de zéolithe contenant le structurant organique, et que le lavage acide de désalumination est effectué au moyen d'une solution tampon d'un sel d'acide et d'un acide minéral ou organique de pH inférieur à 3.

10. Procédé selon la revendication 9 caractérisé en ce que le gel de cristallisation présente une composition molaire en silice, alumine, ions alcalins et structurant organique telle que les rapports molaires varient
de 5 à 15 pour SiO₂/Al₂O₃
de 1 à 2 pour SiO₂/TMA₂O
de 0,03 à 0,25 pour TMA₂O/Na₂O
et de 30 à 150 pour H₂O/ion alcalin
avec TMA₂O le structurant organique choisi parmi les ions tétraalkylammoniums, chaque groupement alkyle comprenant de 1 à 4 carbones de préférence les ions tétraméthylammoniums, les sources de silicium tétravalent et d'aluminium trivalent provenant pour une part du groupe constitué par les silicates, les silices solides ou colloïdales, les gels et xérogels, les esters siliciques hydrolysables et les diatomites et d'autre part de la faujasite X.

11. Application de la mazzite activée selon les revendications de 1 à 8 à l'isomérisation des hydrocarbures paraffiniques de C₄ à C₈

12. Application de la mazzite activée selon les revendications de 1 à 8, à toute transformation d'hydrocarbures faisant appel à un mécanisme de catalyse acide ou bifonctionnelle.

## Claims

1. Silica-enriched activated mazzite having the chemical formula in the anhydrous state expressed in molar ratios as
a M₂/ₙO; Al₂O₃; b SiO₂ with a varying from 0 to 0.5, M being an alkaline cation of valency n and b being greater than 7, characterised in that it has an acidic strength corresponding to a quantity of heat measured by ammonia adsorption microcalorimetry higher than 190 kJ/mole, a porous volume measured by cyclohexane adsorption higher than 0.09 ml/g.

2. Activated mazzite according to claim 1, characterised in that it is obtained from a zeolite precursor itself synthesised from a crystallisation gel containing faujasite X, said precursor being subjected to an activation treatment.

3. Activated mazzite according to claim 2, characterised in that the crystallisation gel has a molar composition of silica, alumina, alkaline ions and organic structuring agent such that the molar ratios vary
from 5 to 15 in the case of SiO₂/Al₂O₃
from 1 to 2 in the case of SiO₂/TMA₂O
from 0.03 to 0.25 in the case of TMA₂O/Na₂O
and from 30 to 150 in the case of H₂O/Na₂O
with TMA₂O being the organic structuring agent selected from tetraalkylammonium ions, each alkyl group containing from 1 to 4 carbons, preferably tetramethylammonium ions, the sources of tetravalent silicon and trivalent aluminium originating, on the one hand, from the group consisting of silicates, solid or colloidal silicas, gels and xerogels, hydrolysable silicic esters and diatomites and, on the other hand, from faujasite X.

4. Activated mazzite according to claims 2 or 3, characterised in that the zeolite precursor with or without organic structuring agent is activated in at least two stages, a first ion exchange stage and a second dealumination stage.

5. Activated mazzite according to claims 2 to 4, characterised in that, during the stage of ion exchange, the alkaline ions of the zeolite precursor containing the organic structuring agent are exchanged by washing with an aqueous solution of an ammonium salt and/or a mineral or organic acid having a pH lower than or equal to 3.

6. Activated mazzite according to claims 2 to 5, characterised in that, during the first phase of the dealumination stage, the solid obtained after ion exchange is kept at a temperature of between 450 and 850°C in a moist atmosphere for 1 minute to 4 hours then washed with an acid buffer solution having a pH varying from 1 to 5 at a temperature varying from 20 to 100°C.

7. Activated mazzite according to claims 2 to 6, characterised in that, during the second phase of dealumination, the thermally treated solid is washed with a buffer solution consisting of a mixture of at least one mineral or organic acid with at least one ammonium salt of at least one mineral or organic acid having a pH preferably between 2 and 3.

8. Activated mazzite according to claims 2 to 7, characterised in that the buffer solution is a mixture of an ammonium salt and the acid corresponding to said salt.

9. Process for obtaining activated mazzite according to claims 1 to 8, comprising a stage of preparation of the zeolite precursor and a stage of activation of said zeolite precursor, characterised in that the crystallisation gel contains a faujasite X, that the activation treatment is applied to the zeolite precursor containing the organic structuring agent and that acidic dealumination washing is carried out using a buffer solution of an acidic salt and a mineral or organic acid having a pH lower than 3.

10. Process according to claim 9, characterised in that the crystallisation gel has a molar composition of silica, alumina, alkaline ions and organic structuring agent such that the molar ratios vary
from 5 to 15 in the case of SiO₂/Al₂O₃
from 1 to 2 in the case of SiO₂/TMA₂O
from 0.03 to 0.25 in the case of TMA₂O/Na₂O
and from 30 to 150 in the case of H₂O/alkaline ion
with TMA20 being the organic structuring agent selected from tetraalkylammonium ions, each alkyl group comprising from 1 to 4 carbons, preferably tetramethylammonium ions, the sources of tetravalent silicon and trivalent aluminium originating, on the one hand, from the group consisting of silicates, solid or colloidal silicas, gels and xerogels, hydrolysable silicic esters and diatomites and, on the other hand, of faujasite X.

11. Application of the activated mazzite according to claims 1 to 8 to the isomerisation of C₄ to C₈ paraffinic hydrocarbons.

12. Application of the activated mazzite according to claims 1 to 8 to any transformation of hydrocarbons employing an acidic or bifunctional catalysis mechanism.

## Patentansprüche

1. Aktivierter, mit Kieselsäure angereicherter Mazzit der chemischen Formel im wasserfreien Zustand, ausgedrückt in Molarverhältnissen,
a M₂/ₙO; Al₂O₃; b SiO₂ wobei a zwischen 0 und 0,5 variiert, M ein Alkalimetallkation der Wertigkeit n bedeutet und b über 7 liegt, dadurch **gekennzeichnet,** dass er eine Säurestärke, die einer Wärmemenge von über 190 kJ/mol, gemessen durch Mikrokalorimetrie der Ammoniakadsorption, entspricht, und ein Porenvolumen von über 0,9 ml/g, gemessen durch Cyclohexanadsorption, aufweist.

2. Aktivierter Mazzit nach Anspruch 1, dadurch **gekennzeichnet,** dass er aus einer Zeolithprecursorverbindung erhalten wurde, die ihrerseits aus einem Kristallisationsgel synthetisiert wurde, das Faujasit X enthält, wobei die Precursorverbindung einer Aktivierungsbehandlung unterworfen wurde.

3. Aktivierter Mazzit nach Anspruch 2, daduch **gekennzeichnet,** dass das Kristallisationsgel eine Molarzusammensetzung an Kieselsäure, Tonerde, Alkalimetallionen und organischem Strukturierungsmittel aufweist, bei dem die Molarverhältnisse
zwischen 5 und 15 für SiO₂/Al₂O₃,
zwischen 1 und 2 für SiO₂/TMA₂O,
zwischen 0,03 und 0,25 für TMA₂O/Na₂O und
zwischen 30 und 150 für H₂O/Na₂O
variieren, wobei das organische Strukturierungsmittel TMA₂O unter Tetraalkylammoniumionen, wobei jede Alkylgruppe 1 bis 4 C-Atome umfasst, und vorzugsweise unter Tetramethylammoniumionen ausgewählt ist, und die Quellen des vierwertigen Siliciums und des dreiwertigen Aluminiums einerseits aus der Gruppe, bestehend aus Silikaten, festen oder kolloidalen Kieselsäuren, Gelen und Xerogelen, hydrolisierbaren Kieselsäureestern und Diatomiten, und andererseits aus Faujasit X stammen.

4. Aktivierter Mazzit nach Anspruch 2 oder 3, dadurch **gekennzeichnet,** dass die Zeolithprecursorverbindung mit oder ohne organisches Strukturierungsmittel auf wenigstens zwei Stufen, und zwar auf einer ersten Stufe des Ionenaustauschs und einer zweiten Stufe der Entaluminierung aktiviert wurde.

5. Aktiverter Mazzit nach einem der Ansprüche 2 bis 4, dadurch **gekennzeichnet,** dass im Verlaufe der Stufe des Ionenaustauschs die Alkalimetallionen der das organische Strukturierungsmittel enthaltenden Zeolithprecursorverbindung durch Waschen mit einer wässrigen Lösung eines Ammoniumsalzes und/oder einer anorganischen oder organischen Säure mit einem pH von unter oder gleich 3 ausgetauscht wurden.

6. Aktiverter Mazzit nach einem der Ansprüche 2 bis 5, dadurch **gekennzeichnet,** dass im Verlaufe der ersten Phase der Entaluminierungsstufe der nach dem Ionenaustausch erhaltene Feststoff bei einer Temperatur von 450 bis 850°C unter feuchter Atmosphäre während 1 Minute bis 4 Stunden gehalten und dann mittels einer sauren Pufferlösung bei einem pH im Bereich von 1 bis 5 und einer Temperatur im Bereich von 20 bis 100°C gewaschen wurde.

7. Aktiverter Mazzit nach einem der Ansprüche 2 bis 6, dadurch **gekennzeichnet,** dass im Verlaufe der zweiten Phase der Entaluminierung der thermisch behandelte Feststoff mit einer Pufferlösung, bestehend aus einem Gemisch aus wenigstens einer anorganischen oder organischen Säure und wenigstens einem Ammoniumsalz wenigstens einer anorganischen oder organischen Säure, bei einem pH von vorzugsweise zwischen 2 und 3 gewaschen wurde.

8. Aktivierter Mazzit nach einem der Ansprüche 2 bis 7, dadurch **gekennzeichnet,** dass die Pufferlösung ein Gemisch eines Ammoniumsalzes und der diesem Salz entsprechenden Säure ist.

9. Verfahren zur Herstellung des aktivierten Mazzits nach einem der Ansprüche 1 bis 8, das eine Stufe der Herstellung der Zeolithprecursorverbindung und eine Stufe der Aktivierung der Zeolithprecursorverbindung umfasst, dadurch **gekennzeichnet,** dass das Kristallisationsgel einen Faujasit X enthält, die das organische Strukturierungsmittel enthaltende Zeolithprecursorverbindung der Aktivierungsbehandlung unterworfen wird und die saure Wäsche zur Entaluminierung mit einer Pufferlösung eines Salzes einer Säure und einer anorganischen oder organischen Säure mit einem pH von unter 3 durchgeführt wird.

10. Verfahren nach Anspruch 9, dadurch **gekennzeichnet,** dass das Kristallisationsgel eine Molarzusammensetzung an Kieselsäure, Tonerde, Alkalimetallionen und organischem Strukturierungsmittel aufweist, bei dem die Molarverhältnisse
zwischen 5 und 15 für SiO₂/Al₂O₃,
zwischen 1 und 2 für SiO₂/TMA₂O,
zwischen 0,03 und 0,25 für TMA₂O/Na₂O und
zwischen 30 und 150 für H₂O/Alkalimetallionen
variieren, wobei das organische Strukturierungsmittel TMA₂O unter Tetraalkylammoniumionen, wobei jede Alkylgruppe 1 bis 4 C-Atome umfasst, und vorzugsweise unter Tetramethylammoniumionen ausgewählt ist, und die Quellen des vierwertigen Siliciums und des dreiwertigen Aluminiums einerseits aus der Gruppe, bestehend aus Silikaten, festen oder kolloidalen Kieselsäuren, Gelen und Xerogelen, hydrolisierbaren Kieselsäureestern und Diatomiten, und andererseits aus Faujasit X stammen.

11. Verwendung des aktivierten Mazzits nach einem der Ansprüche 1 bis 8 zur Isomerisierung von paraffinischen C₄₋₈-Kohlenwasserstoffen.

12. Verwendung des aktivierten Mazzits nach einem der Ansprüche 1 bis 8 für jede Umwandlung von Kohlenwasserstoffen unter Verwendung eines sauren oder bifunktionellen Katalysemechanismus.
